Europäisches Patentamt

European Patent Office

Office européen des brevets

(11) Publication number: **0 239 190**
**A2**

## (12) EUROPEAN PATENT APPLICATION

(21) Application number: 87300606.8

(22) Date of filing: 23.01.87

(51) Int. Cl.⁴: **G01N 27/46** , G01N 27/40 , G01N 27/30

(30) Priority: 23.01.86 US 824569

(43) Date of publication of application:
30.09.87 Bulletin 87/40

(84) Designated Contracting States:
DE GB

(71) Applicant: SENSIDYNE INC.
12345 Starkey Road Suite E
Largo Florida 33543(US)

(72) Inventor: Whitson, Paul E.
12345 Starkey Road Suite E.
Largo Florida 33543(US)

(74) Representative: Lambert, Hugh Richmond et
al
D. YOUNG & CO. 10 Staple Inn
London, WC1V 7RD(GB)

(54) **Electrochemical cell and method for detecting hydrides and hydride vapors.**

(57) An electrochemical cell amd method for the quantitative detection of hydrides and hydride vapors is disclosed. The cell includes a membrane (42) permeable to the hydride being detected and at least a working (32) and a counter (34) electrode. A reference electrode (36) may also be utilized as well as a sampling pump (P) for directing the hydride-containing atmosphere through the cell (26). Measurement of current differential generated upon exposing the cell to hydrides permits quantitative calculation of hydride in the atmosphere being sampled. The electrolyte used is concentrated acid, either sulfuric or phosphoric, which may be in gel form, or may be in aqueous or solvent solution.

FIG 1

EP 0 239 190 A2

# ELECTROCHEMICAL CELL AND METHOD FOR DETECTING HYDRIDES AND HYDRIDE VAPORS

The present invention relates to an electrochemical cell for quantitatively detecting the presence of hydrides in an atmosphere consisting of ambient air, helium, argon, nitrogen, hydrogen and mixtures thereof. The electrochemical cell of this invention is particularly suited for the quantitative detection of hydrides present in doping gases utilized in the electronics industry for the manufacture of semiconductors.

Numerous prior art devices are known for detecting the presence of various "contaminants" in a defined atmosphere. Numerous such current devices utilize a wet chemical-paper tape sensor, while gas chromatographs may also be utilized. In addition, a number of the current state of the art devices utilize electrochemical cells for detecting the presence of noxious and/or toxic materials in air. It is within the field of such electrochemical cells that the most pertinent prior art may be found with respect to the present invention.

Within the general field of electrochemical detection cells, virtually all such cells operate by measuring a voltage differential between a working electrode and a counter electrode when the working electrode is exposed to an atmosphere containing the noxious gas. For example, U. S. Patent No. 3,776,832 to Oswin, et al., discloses an electrochemical cell having a fixed potential of from about 0.9 to 1.5 volts useful for detecting, for example, carbon monoxide, nitric oxide, and even the level of alcohol in a person's breath. A later example of a similar device by the same inventors is disclosed in U. S. Patent No. 3,824,167. In U. S. Patent No. 3,909, 386 to Oswin, et al., an electrochemical cell for detecting and quantitatively measuring a gas in a gaseous medium is disclosed as comprising a construction which is substantially independent of both humidity changes and temperature changes.

According to U. S. Patent No. 3,925,183 to Oswin, et al., an electrochemical detecting cell is disclosed as comprising a heated reservoir means for maintaining the gas sample and the electrochemical cell at a predetermined, substantially constant temperature. According to the disclosure of U. S. Patent No. 4,001,103, an electrochemical cell for detecting and measuring both nitric oxide and nitrogen dioxide is disclosed wherein the working electrode is maintained at a fixed potential relative to the reference electrode of about 0.9 to 1.9 volts. According to the disclosure of U. S. Patent No. 4,127,462, noxious gases selected from the group consisting of nitric oxide, nitrogen dioxide, sulfur dioxide, mercaptans and hydrogen sulfide, all in the presence of carbon monoxide, may be accomplished utilizing an electrochemical cell wherein the sensing electrode comprises a carbon supported gold catalyst and wherein the sensing electrode is maintained at a fixed potential of about 0.4 to 1.5 volts with respect to the counter electrode. Utilization of a gold working electrode for the detection of hydrogen sulfide by an electrochemical cell is also taught in the device of U. S. Patent No. 4,169,779. As a final example of the current state of the art, one may consider U. S. Patent No. 4,201,634 to Stetter. That patent describes and claims a method for detecting hydrazines of improved sensitivity utilizing gold and rhodium electrodes. According to the teaching of that patent, however, aqueous acid electrolyte solutions fail to provide acceptable sensitivity, and the preferred electrolyte is aqueous potassium hydroxide.

Thus, while it is apparent that a number of electrochemical cells for detecting various "contaminants" in an atmosphere are known, virtually nothing is taught in this prior art patent literature with regard to the quantitative detection of hydrides such as diborane, silane, disilane, germane, phosphine, arsine, stilbine, hydrogen selenide or hydrogen telluride. Inasmuch as such hydrides are not only quite toxic but also quite commonly used as doping gases in the electronics industry, accurate, economical and sensitive means for detecting the presence of these hydrides in an atmosphere are extremely important to the safety of that industry. With respect to such hydride contaminants, it must also be noted that prior art devices and methods such as those described above are generally capable of detecting and measuring contaminant concentrations in parts per million. Due to the extreme toxicity of the hydrides used in the electronics industry, devices capable of accurately measuring contaminant concentrations in parts per billion are needed. It was in recognition of the unique problems associated with detecting hydrides that the electrochemical cell of this invention was developed.

As is set forth in greater detail hereinafter, the electrochemical cell of this invention comprises a working electrode and a counter electrode, and optionally a reference electrode. The atmosphere containing the hydrides or hydride vapors passes through a permeable membrane into the electrolyte surrounding the working electrode. It is, of course, to be understood that even in the absence of hydride a small baseline current flows in the cell, which baseline current is electronically compensated and is normally in the range of $10nA/cm^2$-$500nA/cm^2$. In the presence of hydride, an exposure current greater than the base line current flows in the electrochemical cell. This current differential is due to electrochemical oxidation of the hydride, and its value is proportional to the concentration of hydride in the atmosphere. Typically, the current differential is in the range of $100nA/ppm/cm^2$-50 micro $A/ppm/cm^2$.

It is to be understood and appreciated that the housing and all component parts of the electrochemical cell of this invention which are in contact with the hydride and/or the electrolyte are constructed of suitably inert materials incapable of reaction with the electrolyte and/or the hydrides. Suitable materials include, for example, polyethylene, polypropylene, polystyrene, polyvinylchloride and polytetrafluoroethylene.

The primary function of the membrane which separates the atmosphere from the working electrode is not only to contain the electrolyte, but also to permit variation of selectivity of the electrochemical cell. Both functions must be accomplished without unnecessarily degrading the sensitivity and response time of the cell. Cell sensitivity increases and response time decreases if the membrane's thickness is decreased and its permeability is increased. The preferred thickness of the membrane utilized in the cell of this invention is in the range of 0.012-0.080 mm. Selectivity is achieved by size exclusion. A membrane pore size of 0.02-15 microns at a porosity greater than about 50% is preferred. With nonporous membrane materials, permeability increases with increasing solubility of the hydride in the membrane. Selectivity is achieved by solubilization of the hydride in the membrane. The membrane of this invention is preferably formed from material selected from the group consisting of polyfluorinated ethylene, tetrafluoroethylene, fluorinated ethylene/propylene, isotactic propylene, dimethylsilicone and siliconepolycarbonate.

In two electrode cells, both the working and the counter electrode comprise gold, platinum, platinum black, iridium, rhodium, carbon, and alloys or mixtures thereof. Preferably, the electrodes are formed by coating an inner surface of the membrane with a selected material in its powdered form and bonding the powdered material to the membrane as by sintering. Alternatively, the electrodes may be formed from metal wire, mesh, foil or bar stock. In any event, the use of powdered electrode material has the advantage of substantially increasing electrode surface area. It has also been determined that electrodes prepared from dispersions of tetrafluoroethylene binder are quite useful. About 10-20%, by weight, of said binder is mixed with the powdered metal, and that mixture may be coated onto the membrane material and then sintered. Electrodes prepared in this fashion have a low electrical resistance, have a small thickness, and yet have a large electroactive surface.

The electrolyte utilized in the electrochemical cell of this invention may comprise either phosphoric acid or sulfuric acid. Phosphoric acid is preferred as being less corrosive than sulfuric acid in the necessary concentration range of 10-30N. The electrolyte solution may be prepared with organic solvents or may be gelled. Of course, water may also be used as a solvent, but organic solvents having a higher boiling point than water and a lower freezing point than water, yet a comparable dielectric constant to water, are preferred. Such organic solvents may comprise, for example, 1,2-ethanediol, 1,2-propanediol, $\gamma$-butyrolactone, propylane carbonate, N-methylformamide, N,N-dimethylformamide, N,N-dimethylacetamide, 1,1,3,3-tetramethylurea and N-methyltyrrolidone. Alternatively, the electrolyte may be gelled by mixing the acid with a gelling agent such as, for example, methylcellulose or fumed silica. A gelled electrolyte has the advantage of being less sensitive to position or relative orientation of the electrochemical cell.

In those instances wherein the electrochemical cell is constructed to include a reference electrode, the reference electrode is formed from a material selected from the group consisting platinum, platinum black and mixtures thereof. In such a construction, circuit means are provided in electrically-connecting relation between the working electrode and the reference electrode to establish the small baseline current for optimum cell performance.

Though not required, use of a sampling pump in combination with the electrochemical cell may be desirable. Of course, the sampling pump is utilized to direct the hydride-containing atmosphere into the cell. According to known procedures and technology, such use of a sampling pump would permit removal of potentially interfering components by filtration or scrubbing, would permit control of water vapor concentration in the sampled atmosphere within an optimum range of about 5 to 13 mg/l, would permit controlling the temperature of the atmosphere being sampled within an optimum range of about 15 to 30°C, and would provide a constant flow velocity in the preferred range of about 0.1 to 10 cm/sec.

While it is known that the electrochemical reaction occurring within the cell is oxidation, the precise nature of the reaction is unknown. In as much as it has been determined that the electrochemical cell of this invention is effective for measuring the concentration of each of the hydrides listed above, the simple hypothesis that the gaseous hydrides hydrolyze to hydrogen which is then oxidised to hydrogen ions is not supported. An alternate hypothesis considers complex oxidation of the non-metal element to an oxide or oxo acide. It is, therefore, probable that multiple products are operative within the cell of this invention.

For a fuller understanding of the invention, reference should be had to the following detailed description taken in connection with the accompanying drawings, in which:

FIGURE 1 is an exploded view of a first embodiment of the electrochemical cell of this invention, also illustrating the use of a sampling pump as indicated in phantom.

FIGURE 2 is an exploded view of a second embodiment of the electrochemical cell.

FIGURE 3 is an exploded view of a third embodiment of the electrochemical cell.

FIGURE 4 is an exploded view of a fourth embodiment of the electrochemical cell.

Similar reference characters refer to similar parts throughout the several views of the drawings.

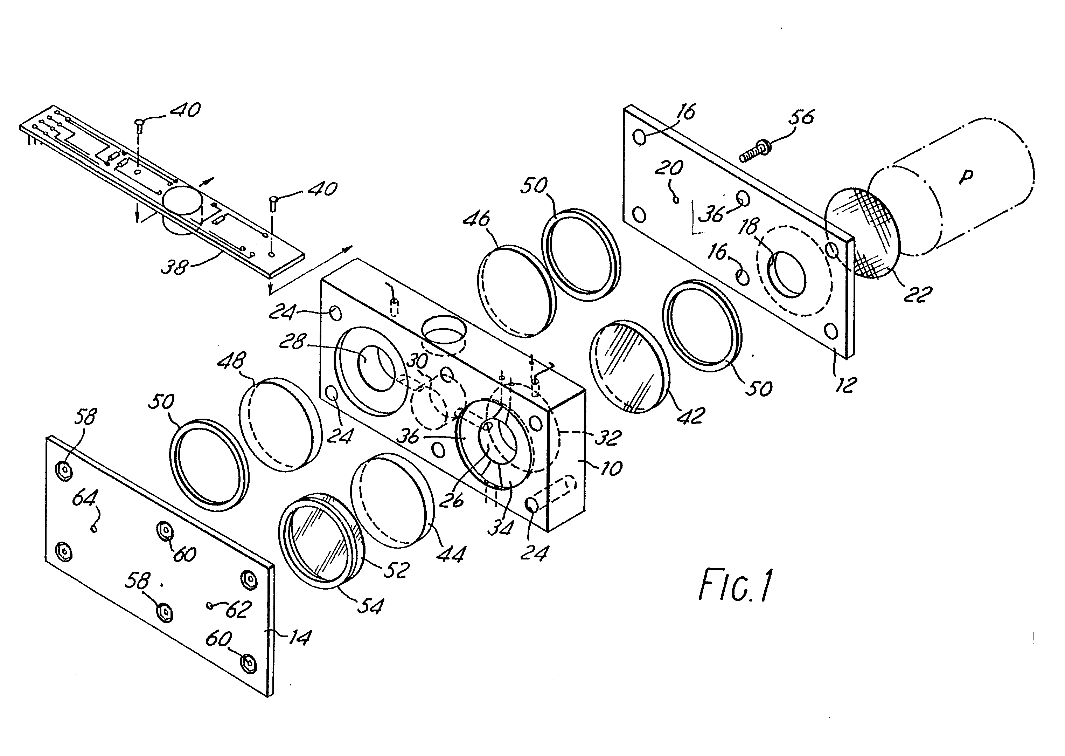

Referring to the exploded view of Fig. 1, there is illustrated a first embodiment of the electrochemical cell of this invention. Cell housing 10, front cover 12, and rear cover 14 are all formed from inert materials which will not react with either the strongly acidic electrolyte or the hydride being detected. In addition to fastening apertures 16, front cover 12 includes both an inlet port 18 and a cover vent 20 formed therethrough. A protective screen 22 is mounted on the exterior of front cover 12 in enclosing relation to inlet port 18.

Referring to cell housing 10, it can be seen that a plurality of housing fastening apertures 24 are formed therethrough in corresponding relation to the fastening apertures 16 formed through front cover 12. Also formed transversely through cell housing 10 are sample tunnel 26 and reference tunnel 28. The interior of sample tunnel 26 and reference tunnel 28 are in fluid communication with each other by virtue of the cross passage 30 formed in interconnecting relation therebetween within cell housing 10. It is to be understood that the particular shape or configuration of the cross passage 30 is a matter of choice.

Inasmuch as it is passing the hydride-containing atmosphere through sample tunnel 26 which permits quantitative detection of the hydride, electrodes must also be disposed therein. A working electrode 32 (anode) is mounted within sample tunnel 26 substantially adjacent the side of cell housing 10 which will receive front cover 12. Also disposed within sample tunnel 26, but down stream of working electrode 32 are counter electrode 34 and reference electrode 36. The working electrode 32, counter electrode 34 and reference electrode 36 are all electrically connected to printed circuit board 38 which is mounted on the top of cell housing 10 and fastened thereto as by screws 40.

Details of the electronics used to convert the output current of the electrochemical cell into an indication of hydride concentration are not shown, for they are well known in the art. For example, the electronics may be as simple as a suitable voltage source, a resistance in series with the electrochemical cell and in parallel with a voltmeter. In the case of a three electrode cell, as shown in the view of Fig. 1, it is desirable to potentiostat the baseline current between working electrode 32 and reference electrode 36, and suitable circuitry would be provided. Furthermore, it may be desirable to incorporate temperature compensation circuitry should the electrochemical cell and the hydride-containing atmosphere being passed therethrough the subject to temperature changes. This circuitry would also, preferably, include high gain/low noise current amplification.

Working electrode 32 and counter electrode 34 may be formed from metal wire, mesh, foil or bar stock. Both of the electrodes 32 and 34 may comprise gold, platinum, platinum black, iridium, rhodium or carbon. Alternatively, both electrodes 32 and 34 may be formed from powdered metal by dispersion-coating and bonding onto a substrate. The use of powdered metal has the advantage of substantially increasing electrode area within the confines of the relatively small electrochemical cell. Electrodes 32 and 34 prepared from dispersions of powdered metal mixed with from about 10 to 20 weight percent tetrafluoroethylene binder not only possess very desirable low electrical resistance, but also have a small thickness while providing a large electroactive surface area. It should also be noted that working electrode 32 and counter electrode 34 may be formed by coating the selected electrode material/binder dispersion on the interior surfaces of the cell membranes, which membranes are described in greater detail below.

The electrical circuit between the electordes and the detecting/measuring circuitry is completed by filling the void defined by sample tunnel 26, reference tunnel 28 and cross passage 30 with an electrolyte material. The preferred electrolyte is 10 to 30 N phosphoric acid or sulfuric acid. Phosphoric acid is slightly preferred as being less corrosive than sulfuric acid within this concentration range. While an aqueous solution may be used, organic solvents having a higher boiling point than water, a lower freezing point than water, and a comparable dielectric constant to water are preferred. When organic solvents possessing these characteristics such as, for example, 1,2-ethanediol, 1,2-propanediol, γ-butyrolactane, propylene carbonate, N-methylformamide, N,N-dimethylformamide, N,N-dimethylacetamide, 1,1,3,3-tetramethylurea, and N-methylpyrrolidone, are used there is less frequent need for maintenance, the operable temperature range is expanded, and sensitivity to varying water vapor concentration in the hydride-containing atmosphere is minimized.

The reference electrode 36 is formed from either platinum, platinum black or mixtures thereof. As already indicated above, electrochemical cells including a reference electrode 36 do utilize circuit means in electrically-connecting relation between working electrode 32 and reference electrode 36 for establishing a small baseline current for optimum cell performance, and the electrical connection is usually by means of a potentiostat.

Still with reference to the electrochemical cell embodiment shown in the view of Fig. 1, it can be seen that four membranes 42, 44, 46 and 48 are employed. Membrane 42 is placed in closing relation to the front of sample tunnel 26, and membrane 44 is placed in closing relation to the downstream side of sample tunnel 26. In similar fashion, membrane 46 closes the front of reference tunnel 28 while membrane 48 closes the downstream side of reference tunnel 28. Each of the membranes 42, 46 and 48 is held in place by a corresponding O-ring 50. However, membrane 44 is held in place first by transparent membrane 52 and then a final O-ring 54. While it can be appreciated that a primary function of the membranes 42 and 44 is to separate the atmosphere from the electrodes and to contain the electrolyte placed within the void defined by sample tunnel 26, reference tunnel 28 and cross passage 30, membranes 42, 44, 46 and 48 also permit variation of selectivity of the electrochemical cell. Recognizing that hydrides selected from the group consisting of diborane, silane, disilane, germane, phosphine, arsine, stilbine, hydrogen, selenide and hydrogen telluride may be quantitatively measured by the cell of Fig. 1, the membranes are formed from an appropriate material selected for its permeability or the solubility of the hydride to be detected. Membranes may be formed from, for example, polyfluorinated ethylene, tetrafluoroethylene, fluorinated ethylene/propylene, isotatic propylene, dimethylsilicone and silicone-polycarbonate. Sensitivity of the electrochemical cell increases and response time decreases with decreased thickness and increased permeability of the membranes, especially membrane 42. The desired thickness is in the range of 0.012-0.080mm. Permeability of the membrane generally decreases with increased molecular size and mass. For microporous materials, permeability increases with increasing poresize and porosity. A poresize of about 0.02-15 microns at a porosity greater than 50% is preferred. For nonporous materials, permeability increases with increasing solubility of the hydride in the membrane, and selectivity is achieved by solubilization of the hydride in the membrane material.

Once the cell and its circuit have been assembled as illustrated in the view of Fig. 1, it can be seen that front cover 12 and rear cover 14 are attached to cell housing 10 as by screws 56 which extend through fastening apertures 16, housing fastening apertures 24, and corresponding securing apertures 58 formed through rear cover 14. Nuts 60 are applied, and the cell construction is complete. Attention is also invited to the fact that rear cover 14 is provided with a sample vent 62 and a reference vent 64 formed therethrough in corresponding relation to inlet port 18 and cover vent 20, respectively.

Having thus set forth a detailed description of the construction of this embodiment of the electrochemical cell, exposure of working electrode 32 to an atmosphere containing a hydride will result in a current flow through the cell circuit which is greater than the baseline current. This current differential is due to the electrochemical oxidation of the hydride, and its value is proportional to the concentration of hydride in the atmosphere being tested. Typically, the current differential is in the range of $100nA/ppm/cm^2$-50 micro $A/ppm/cm^2$, and the cell is useful for detecting hydrides at concentrations as low as 50 parts per billion.

Finally, as indicated in phantom in the view of Fig. 1, the operation and sensitivity of this electrochemical cell may be enhanced by the utilization of a sampling pump P for directing the hydride-containing atmosphere through sample tunnel 26. Though not required, use of a sampling pump P is advantageous in that it permits removal of potential interferents by filtration or scrubbing, it permits control of water vapor concentration within an optimum range of about 5-13 mg/l, it permits control of the hydride-containing atmosphere's temperature in an optimum range of about 15-30 degrees C, and it insures a constant flow velocity through the sample tunnel, preferably in the range of 0.1-10 cm/sec. It is also to be noted that the electrochemical cell of this invention has a fixed electrical potential of -100-1,000mV, with the preferred fixed electrical potential being between 0 and 500mV. In the absence of any hydride, the small baseline current flowing in the cell is typically in the range of $10nA/cm^2$-$500nA/cm^2$. It is proportional to the area of membrane 42 and the area of working electrode 32 and the concentration of hydride in the atmosphere. Typically, the difference current is in the range already stated above, and this current differential is electronically processed to indicate the hydride concentration.

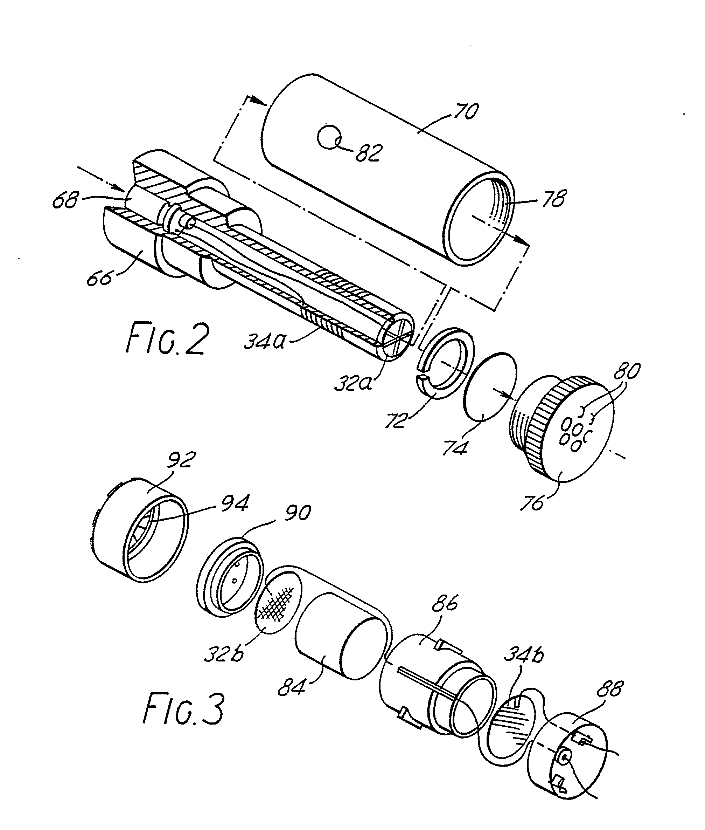

Having thus described the construction of the first embodiment of the electrochemical cell of this invention, attention is now invited to the second embodiment shown in the view of Fig. 2, also in an exploded representation. According to this construction for the electrochemical detecting cell, a main body 66, formed from suitable inert material as previously discussed, is provided. Mounted within main body 66 is a coaxial connector 68. One end of coaxial connector 68 is operatively connected to the cell electronic circuit (not shown) while the other end of coaxial connector 68 includes appropriate leads for working electrode 32a and counter electrode 34a. A body tube 70 also formed from appropriate inert material, is dimensioned and configured to fit in substantially surrounding relation to the segment of main body 66 having electrodes 32a and 34a mounted thereon. Electrolyte, as previously described, is placed within the cavity defined by the elongate extension of main body 66 and is held therein by retaining ring 72, membrane 74 and apertured cap 76 by screwing apertured cap 76 into the threads 78 formed on the interior of main body 66. Apertures 80 permit the introduction of hydride-containing atmosphere into the cell of Fig. 2, and a body vent 82 is provided through a wall of body tube 70 for exit of the hydride-containing atmosphere.

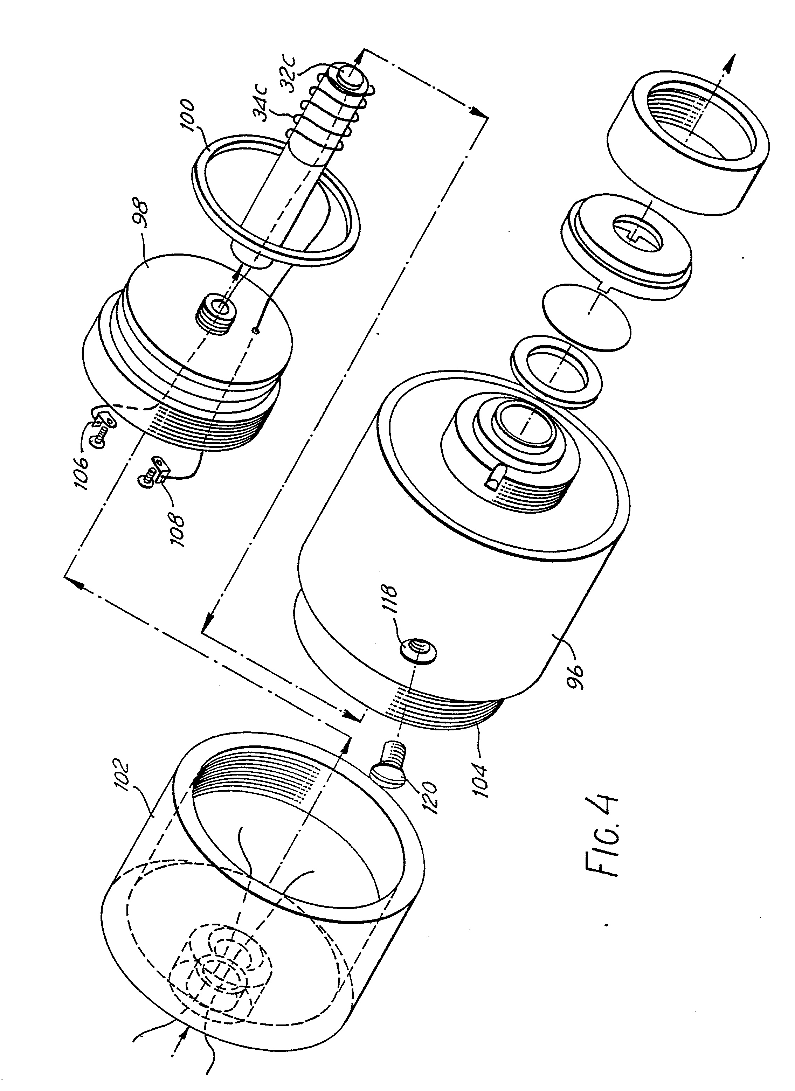

The third embodiment of the electrochemical cell of this invention, shown in the exploded view of Fig. 3, utilizes a gelled electrolyte, and is therefore less sensitive to the position or orientation of the cell in an end use application. The gelled electrolyte 84 is formed by adding the selected acid to either methylcellulose or fumed silica. The shape and configuration of the gelled electrolyte 84 is such that it may be received within main body 86 of this cell. Placed adjacent a first end of gelled electrolyte 84 is a working electrode 32b. Disposed at the other end of gelled electrolyte 84 and main body 86 is counter electrode 34b. Corresponding electrical conduits extend from working electrode 32b and counter electrode 34b through end cap 88 for appropriate connection to the cell's electronic circuitry (not shown). Working electrode 32b is held in place against gelled electrode 84 by front cap 90, and final assembly of this wand-type electrochemical cell is accomplished by the placement of retaining cap 92 into which a membrane 94 has been fitted over retaining cap 92 into engagement with main body 86.

For purposes of fully describing and illustrating the electrochemical cell of this invention a fourth embodiment is shown in the exploded view of Fig. 4. This embodiment is characterized by its construction including a reservoir 96. Working electrode 32c and counter electrode 34c are mounted within the interior of reservoir 96 by screwing reservoir 98 and its associated O-ring 100 into the internal threads (not shown) of reservoir 96. Cell cap 102 is then screwed onto the external threads 104 of reservoir 96 after making appropriate connection to the electrode leads 106 and 108 whereby the cell of Fig. 4 will be operatively connected to the cell's electronic circuitry (not shown).

Reservoir 96 may then be filled with an appropriate electrolyte and closed by the serial placement of second O-ring 110, membrane 112, retaining ring 114, and collar 116. Though not shown, it is to be understood that a sampling pump could be disposed into operative, communicating relation with the exposed end of collar 116. Finally, a vent 118 is provided through the side wall of reservoir 96 and is defined by a threaded aperture. A vent screw 120 may be utilized to close vent 118.

In conclusion, it will be understood that the above embodiments are described by way of example only and numerous changes may be made therein without departing from the scope of the present invention.

## Claims

1. An electrochemical cell for quantitatively detecting gaseous hydride or hydride vapors, characterised in that the cell comprises: a membrane (42) permeable to the gaseous hydride or hydride vapours; a working electrode (32) downstream of said membrane; a counter electrode (34); an electrolyte material in contact with said working (32) and said counter (34) electrodes; means connecting said working (32) and counter (34) electrodes for measuring any baseline current therebetween; and means for measuring the current differential flowing between said working (32) and counter (34) electrodes when said membrane (42) is exposed to a gaseous atmosphere containing said hydride.

2. An electrochemical cell according to claim 1, characterized in that the membrane (42) is formed from a polyfluorinated ethylene polymer, polytetrafluoroethylene, a fluorinated ethylene/propylene polymer, isotactic polypropylene, dimethylsilicone polymer or a silicone-polycarbonate polymer.

3. An electrochemical cell according to claim 1 or 2, characterised in that the membrane (42) has a pore size of from 0.02 to 15 microns, a porosity greater than 50%, and a thickness of from 0.012 to 0.080 mm.

4. An electrochemical cell according to any one of claims 1-3, characterized in that the working (32) and counter (34) electrodes are of gold, platinum, platinum black, iridium, rhodium, carbon, or an alloy or mixture of two or more thereof.

5. An electrochemical cell according to any one of claims 1-4, charcterised in that the working electorde (32) is formed by coating said membrane with the electrode material in a powdered form and bonding said powdered material to said membrane.

6. An electrochemical cell according to claim 5, characterised in that said powdered electrode material further comprise a minor amount, by weight, of a tetrafluoroethylene binder.

7. An electrochemical cell according to claim 6, characterised in that said electrode material comprises from 10 to 20%, by weight, of said binder.

8. An electrochemical cell according to any one of claims 1-7, characterised in that the electrolyte comprises a concentrated acid.

9. An electrochemical cell according to claim 8, characterised in that the electrolyte is phosphoric acid or sulfuric acid.

10. An electrochemical cell according to claim 8 or 9, characterised in that the electrolyte comprises a solution of said acid in water, 1,2-ethanediol, 1,2-propanediol, γ-butyrolactone, propylene carbonate, N-methylformamide, N,N,-dimethylformamide, N,N-dimethylacetamide, 1,1,3,3-tetramethylurea, or N-methylpyrrolidone.

11. An electrochemical cell according to claim 8 or 9, characterised in that the electrolyte is a gel.

12. An electrochemical cell according to claim 11, characterised in that the gel comprises a mixture of said acid with methylcellulose or fumed silica.

13. An electrochemical cell according to any one of claims 1-12, further comprising a reference electrode (36) and second means connecting said working electrode (32) and said reference electrode (36), said second means comprising a potentiostat.

14. An electrochemical cell according to claim 13, characterised in that the reference electrode (36) is of gold, platimum, platimum black, iridium, rhodium, carbon, or an alloy or mixture of two or more thereof.

15. An electrochemical cell according to any one of claims 1-14, further comprising a sampling pump (P) for directing the atmosphere containing the hydride into the cell through said membrane.

16. A method of quantitatively measuring the concentration of hydride gas or vapor in a gaseous atmosphere, characterised by introducing a sample of said atmosphere into an electrochemical cell comrpising a working electrode (32), a counter electrode (34) and an electrolyte, and measuring the differential current output from the cell.

17. A method according to claim 16, as applied to the measurement of diborane, silane, disilane, germane, phosphine, arsine, stilbine, hydrogen selenide or hydrogen telluride in an atmosphere of air, helium, argon, nitrogen, hydrogen or mixtures thereof.

18. A method according to claim 16 or 17, wherein the working and counter electrodes are of gold, platinum, platinum black, iridium, rhodium, carbon, or mixtures of alloys of two or more thereof.

19. A method according to claim 18, wherein said electrodes comprise a layer or film of powdered electrode material bonded with a synthetic resin binder.

20. A method according to any one of claims 16-19, wherein the electrolyte comprises a concentrated acid.

21. A method according to claim 20, wherein said acid is phosphoric acid or sulfuric acid.

22. A method according to claim 21, wherein the electrolyte is as specified in claim 10, 11 or 12.

23. A method according to any one of claims 16-22, wherein the hydride containing sample is introduced into the cell electrolyte through a permeable membrane.

24. A method according to claim 23, wherein the membrane is of a material as specified in claim 2.

FIG.1

70

82

68

66

78

FIG.2

34a

32a

72

74

80

76

92

94

90

32b

86

84

34b

88

FIG.3

FIG. 4

0 239 190